# EUROPÄISCHE PATENTSCHRIFT

(11) **EP 4 180 320 B1**
(45) Veröffentlichungstag und Bekanntmachung des Hinweises auf die Patenterteilung: **01.04.2026**
(21) Anmeldenummer: 22206880.1
(22) Anmeldetag: 11.11.2022
(51) Int. Cl.: B63H 5/125, B63H 20/28, B63H 21/38

(54) **UNTERWASSERANTRIEBSEINHEIT**
UNDERWATER PROPULSION UNIT
UNITÉ D'ENTRAÎNEMENT SOUS-MARINE

(30) Priorität: 11.11.2021 DE 102021129462
(43) Veröffentlichungstag der Anmeldung: 17.05.2023
(73) Patentinhaber: Torqeedo GmbH, 82234 Wessling (DE)
(72) Erfinder: Busse, Dominik, 82234 Wessling (DE); Spengler, Anton, 82234 Wessling (DE); Goetze, Cedric, 82234 Wessling (DE)
(74) Vertreter: Nordmeyer, Philipp Werner

(56) Entgegenhaltungen:
- EP-A1- 3 809 565
- DE-A1- 102020 131 564
- FR-A1- 2 823 177

## Beschreibung

### Technisches Gebiet

Die vorliegende Erfindung betrifft eine Unterwasserantriebseinheit, umfassend ein zur Umströmung mit Wasser ausgelegtes Kunststoffgehäuse und ein Metallgehäuse mit einem elektrischen Antrieb. Die vorliegende Erfindung betrifft ferner ein System aus mindestens zwei solchen Unterwasserantriebseinheiten. Weiterhin betrifft die vorliegende Erfindung ein Boot mit einer solchen Unterwasserantriebseinheit.

### Stand der Technik

Unterwasserantriebseinheiten werden häufig mit einem elektrischen Antrieb ausgestattet. Die Entwicklung von elektrischen Unterwasserantriebseinheiten unterliegt mehreren Anforderungen, die im Wettbewerb miteinander stehen.

Einerseits ist es erforderlich, die Antriebseinheit in einem gut wärmeleitenden Material zu lagern, um zu vermeiden, dass der elektrische Antrieb oder dessen Leistungskomponenten überhitzen. Aus diesem Grund werden Antriebseinheiten oft in metallischen Gehäusen montiert. Andererseits muss die Unterwasserantriebseinheit optimale Strömungseigenschaften aufweisen, um Reibungsverluste bei Umströmung mit Wasser möglichst gering zu halten. Hier kommen häufig spezielle Beschichtungen oder zumindest besonders gute Oberflächenqualitäten zum Einsatz. Zudem müssen die Metallgehäuse vor Umwelteinflüssen, insbesondere vor damit einhergehender Korrosion geschützt werden. Durch die Kombination von Metallgehäuse mit geringem Wasserwiderstand und Schutzbeschichtung entstehen jedoch erhebliche Kosten. Dies widerspricht einer weiteren wichtigen Anforderung, nämlich Kosten einzusparen. Bei der Entwicklung von Unterwasserantriebseinheiten, insbesondere für die unteren Leistungsklassen, liegt also ein Zielkonflikt aus Kühlung, Strömungsoptimierung und Kostenreduktion vor. Weiterhin spielt das Design der Unterwasserantriebseinheit für die Marktgängigkeit eine Rolle. Im Stand der Technik werden einzelne Aspekte dieses Zielkonflikts thematisiert.

In der EP 2 762 402 A2 wird eine Antriebseinheit für ein Schiff offenbart, bei der die Kühlung der Antriebseinheit dadurch erreicht wird, dass der Motor sowohl von innen als auch von außen gekühlt wird.

Aus der US 2004014380 A1 ist ein Schiffsantrieb bekannt, der in einem Gehäuse einen Elektromotor aufweist und zudem Strömungsöffnungen aufweist, über die die Antriebseinheit gekühlt werden kann.

In der US 20070173140 A1 ist ein integrierter Außenbordmotor offenbart, der in einem Kunststoffgehäuse einen elektrischen Antrieb aufweist.

Nachteilig an den aus dem Stand der Technik bekannten Lösungen ist jedoch, dass keine der bekannten Lehren eine zufriedenstellende Lösung des Zielkonflikts aus Kühlung, Strömungsoptimierung und Kostenersparnis ermöglicht. Entweder ist gemäß dem Stand der Technik das Gehäuse aus Metall hergestellt, wodurch dies aufwendig und teuer strömungsoptimiert nachbearbeitet werden muss, oder das Gehäuse ist aus Kunststoff, wodurch die Kühlung des elektrischen Antriebs nicht optimal ist.

FR 2 823 177 A1 offenbart eine Vorrichtung mit der Wasser durch den Stator eines Elektromotors geführt werden kann.

DE 10 2020 131 564 A1 offenbart eine elektromotorische Antriebsvorrichtung für eine schwimmfähige Vorrichtung, wobei der Antrieb einen Elektromotor umfasst der in einem Gehäuse aufgenommen ist, wobei das Gehäuse Eintrittsöffnungen aufweist durch die der Elektromotor mit Wasser umströmt werden kann.

EP 3 809 565 A1 offenbart einen Antrieb für ein Boot umfassend ein Gehäuse, wobei in dem Gehäuse ein Kühlabschnitt vorgesehen ist, welcher mit einem Kühlmedienkanal versehen ist.

### Darstellung der Erfindung

Ausgehend von dem bekannten Stand der Technik ist es eine Aufgabe der vorliegenden Erfindung, eine verbesserte Unterwasserantriebseinheit bereitzustellen.

Die Aufgabe wird durch eine Unterwassereinheit mit den Merkmalen des Anspruchs 1 gelöst. Vorteilhafte Weiterbildungen ergeben sich aus den Unteransprüchen, der Beschreibung und den Figuren.

Entsprechend wird eine Unterwasserantriebseinheit, bevorzugt für einen Außenbordmotor oder einen Pod-Antrieb, vorgeschlagen, umfassend ein zur Umströmung mit Wasser ausgelegtes Kunststoffgehäuse und ein Metallgehäuse, in dem ein elektrischer Antrieb aufgenommen ist. Erfindungsgemäß ist der elektrische Antrieb wasserdicht gegenüber der Umgebung abgedichtet in dem Metallgehäuse aufgenommen und das Metallgehäuse ist innerhalb des Kunststoffgehäuses angeordnet.

Dadurch, dass das Metallgehäuse wasserdicht ist und innerhalb des Kunststoffgehäuses angeordnet ist, wird eine Trennung der Funktionen "Kühlung des elektrischen Antriebs" und "Strömungsoptimierung" erzielt. Mit anderen Worten kommt ein "Hülle-in-Hülle"-Prinzip zum Einsatz, nämlich ein "Metallgehäuse-in-Kunststoffgehäuse"-Prinzip.

Die Funktion "Kühlung des elektrischen Antriebs" wird dabei mittels des Metallgehäuses erfüllt, welches gute Wärmeleiteigenschaften aufweist und dadurch effizient Wärme aus dem elektrischen Antrieb an das das Metallgehäuse umgebende Medium, Wasser oder Kunststoffmaterial, transportiert.

Die Funktion "Strömungsoptimierung" wird dabei mittels des Kunststoffgehäuses erfüllt, welches einfach und flexibel in beliebige Formen gebracht werden kann, die für den jeweiligen Anwendungsfall der Unterwasserantriebseinheit optimal sind. Insbesondere können durch die Verwendung eines Kunststoffgehäuses kostspielige Maßnahmen zum Korrosionsschutz und zur strömungsoptimierenden Beschichtung im Vergleich zu einem Metallgehäuse vermieden und die Herstellungskosten gesenkt werden.

Im Ergebnis muss daher das Metallgehäuse keine strömungsoptimierten Eigenschaften und keine besonderen gestalterischen Ausgestaltungen aufweisen und kann mit einer einfachen Materialoberfläche versehen sein, so dass es dadurch besonders einfach aufgebaut werden kann. Dadurch kann das Metallgehäuse beispielsweise weitestgehend mit einer unbehandelten Oberfläche bereitgestellt werden. Das Metallgehäuse kann auch mit einer einfachen Form wie beispielsweise einer zylindrischen Form ausgestaltet werden.

Gleichzeitig muss das Kunststoffgehäuse keine abdichtenden Eigenschaften aufweisen. Das Kunststoffgehäuse kann daher allein in Bezug auf strömungstechnische Anforderungen ausgelegt werden.

Damit wird durch eine Unterwasserantriebseinheit, umfassend ein zur Umströmung mit Wasser ausgelegtes Kunststoffgehäuse und ein Metallgehäuse mit einem elektrischen Antrieb, wobei das Metallgehäuse wasserdicht ist und innerhalb des Kunststoffgehäuses angeordnet ist, der Zielkonflikt aus Kosteneinsparung, Strömungsoptimierung und Kühlung optimal gelöst. Des Weiteren wird das Metallgehäuse aufgrund der Knautschzone, die das Kunststoffgehäuse bereitstellt, gegenüber mechanischem Energieeintrag, wie dies etwa bei einer Grundberührung gegeben sein kann, gegen Schaden, insbesondere gegen Wasserschaden, der zu einem Totalschaden des Motors und der Elektronik führen kann, geschützt. Zudem kann aufgrund des Kunststoffgehäuses auf einen zusätzlichen Schutz des Metallgehäuses gegenüber Umwelteinflüssen verzichtet werden.

Eine Unterwassereinheit im Sinne der vorliegenden Offenbarung ist ein Pylon eines Außenbordmotors oder eines Pods, der sich im Nennbetrieb der Unterwasserantriebseinheit ganz oder teilweise unterhalb der Wasseroberfläche befindet.

Unter einem Kunststoffgehäuse kann im Sinne der vorliegenden Offenbarung ein Gehäuse verstanden werden, das einen Kunststoff aufweist. Insbesondere kann darunter ein Gehäuse verstanden werden, das ausschließlich aus einem Kunststoff oder mehreren Kunststoffen oder Verbundwerkstoffen hergestellt ist. Das Kunststoffgehäuse kann beschichtet oder unbeschichtet sein. Insbesondere kann das Kunststoffgehäuse lackiert sein. Alternativ oder ergänzend kann das Kunststoffgehäuse eine Oberflächenprägung aufweisen. Vorzugsweise kann die Oberflächenprägung so ausgebildet sein, dass bei Umströmen des Kunststoffgehäuses mit Wasser die Reibung reduziert wird.

Unter einem Metallgehäuse kann im Sinne der vorliegenden Offenbarung ein Gehäuse verstanden werden, das Metall aufweist. Insbesondere kann darunter ein Gehäuse verstanden werden, das ausschließlich aus Metall hergestellt ist. Beispielsweise kann das Gehäuse ein Gussteil umfassen. Vorteilhafterweise weist das Metallgehäuse eine unbehandelte Oberfläche auf. Dadurch können Kosten eingespart werden.

Der Begriff wasserdicht ist so zu verstehen, dass im Nennbetrieb der Unterwasserantriebseinheit keine oder eine nur vernachlässigbare Menge Wasser in das Metallgehäuse eindringen kann.

Vorzugsweise ist der elektrische Antrieb der Unterwasserantriebseinheit für eine der unteren Leistungsklassen von Unterwasserantriebseinheiten ausgelegt, insbesondere als ein elektrischer Antrieb mit einer Leistung von 0,2 PS bis 80 PS, beispielsweise zwischen 0,2 bis 0,7 PS, 1 bis 3 PS, 1,5 bis 3 PS, 5 bis 20 PS oder 40 bis 80 PS (ca. 150W bis 500W, 730W bis 2,2kW, 1,1 bis 2,2kW, 3,6 bis 14,7 kW oder 29,4 bis 58 kW) . Dies hat den Vorteil, dass in dieser Leistungsklasse besonders hohe Kosteneinsparungen durch eine wie hierin offenbarte Unterwasserantriebseinheit erzielt werden können.

Erfindungsgemäß weist das Kunststoffgehäuse Öffnungen auf, die über einen Strömungskanal verbunden sind, wobei das Kunststoffgehäuse so ausgebildet ist, dass im umströmten Zustand des Kunststoffgehäuses ein zumindest teilweises Umströmen des Metallgehäuses erfolgt.

Dadurch, dass das Kunststoffgehäuse Öffnungen aufweist, die über einen Strömungskanal verbunden sind, und dadurch, dass das Kunststoffgehäuse so ausgebildet ist, dass im umströmten Zustand des Kunststoffgehäuses ein zumindest teilweises Umströmen des Metallgehäuses erfolgt, ist es möglich, das Metallgehäuse besonders effizient zu kühlen. Eine Beschichtung des Metallgehäuses ist dabei nicht erforderlich, da das Metallgehäuse nicht Teil der Außenstruktur ist und nicht die Funktion der Strömungsoptimierung erfüllen muss. Mithin muss das Metallgehäuse keine besonderen strömungstechnischen Anforderungen erfüllen. Gleichzeitig muss das Metallgehäuse auch keine ästhetischen Anforderungen erfüllen, da es von außen nicht beziehungsweise nur kaum einsehbar ist.

Dadurch, dass im umströmten Zustand des Kunststoffgehäuses ein zumindest teilweises Umströmen des Metallgehäuses erfolgt, ist im Betrieb eine Kühlung des Metallgehäuses und damit der darin angeordneten Antriebskomponenten möglich.

Im Sinne der vorliegenden Offenbarung ist unter einem zur Umströmung mit Wasser ausgelegtem Kunststoffgehäuse ein Gehäuse gemeint, das einen Kunststoff sowie eine Beschaffenheit, insbesondere Außenkontur, aufweist, die hinsichtlich einer Umströmung mit Wasser optimiert ist. Vorteilhafterweise umfasst das Kunststoffgehäuse im vorderen Bereich mindestens eine Eintrittsöffnung und im hinteren Bereich mindestens eine Austrittsöffnung, wobei sich der Strömungskanal entlang der Längsachse L der Unterwasserantriebseinheit erstreckt. Mit anderen Worten kann so im Betrieb der Unterwasserantriebseinheit umströmendes Wasser über die Eintrittsöffnung in das Kunststoffgehäuse eintreten, über den Strömungskanal zum Metallgehäuse gelangen und dann über die Austrittsöffnung das Kunststoffgehäuse verlassen. Dadurch kann eine kontinuierliche Umströmung des Metallgehäuses erzielt werden, wodurch im Betrieb eine optimale Kühlung der Antriebskomponente gegeben ist.

Vorteilhafterweise ist der Strömungskanal zumindest teilweise durch das Metallgehäuse ausgebildet. Mit anderen Worten bildet das Metallgehäuse zumindest eine Begrenzung beziehungsweise Wandabschnitt des Strömungskanals aus. Dadurch, dass der Strömungskanal zumindest teilweise durch das Metallgehäuse ausgebildet ist, gelangt Wasser im umströmten Zustand des Kunststoffgehäuses durch den Strömungskanal in Kontakt mit dem Metallgehäuse. Durch die Benetzung mit Wasser wird der Wärmeübergang zwischen dem Metallgehäuse und dem Wasser optimiert, wodurch die Kühlung weiter verbessert wird.

Vorteilhafterweise ist das Kunststoffgehäuse mit einem Schaftrohr verbunden, wobei die Verbindung über eine Schaftrohr-Anformung erfolgt. Dadurch, dass das Kunststoffgehäuse mit dem Schaftrohr verbunden ist, muss das Metallgehäuse nicht an das Schaftrohr angeschweißt oder angeformt werden. Im Vergleich zu etablierten Herstellungsverfahren wie etwa dem Anschweißen des Schaftrohrs an das Metallgehäuse beziehungsweise dem Anformen einer Schaftrohranbindung an ein Metallgehäuse als Gussteil, können die Herstellungskosten so erheblich reduziert werden, da etliche Fertigungsschritte wie etwa Drehen, Bohren, Schweißen beziehungsweise Gießen und mechanisches Nacharbeiten entfallen. Darüber hinaus ermöglicht das Verbinden des Schaftrohrs mit dem Kunststoffgehäuse eine größere Designfreiheit für die Ausgestaltung des Kunststoffgehäuses sowie des Metallgehäuses.

Das Schaftrohr kann aber auch direkt an dem Metallgehäuse angebunden sein, beispielsweise mit diesem verschweißt, vernietet oder verschraubt sein oder mit diesem einstückig ausgebildet sein. Durch eine direkte Anbindung des Schaftrohrs an das Metallgehäuse kann eine weiter verbesserte strukturelle Festigkeit erreicht werden. Das Kunststoffgehäuse kann dabei ebenfalls ans Schaftrohr angebunden sein - beispielsweise über die bereits genannte Anformung.

Das Kunststoffgehäuse kann aber auch nur am Metallgehäuse gehalten sein, das seinerseits am Schaftrohr angebunden ist. In dieser Ausgestaltung kann das Kunststoffgehäuse im Bereich des Durchgangs des Schaftrohrs eine einfache Öffnung aufweisen, durch welche hindurch das Schaftrohr ohne weitere Befestigung des Kunststoffgehäuses geführt ist.

Vorteilhafterweise umfasst der elektrische Antrieb einen Elektromotor, optional ein Getriebe und/oder eine Elektronikkomponente und treibt über eine Antriebswelle einen Propeller an. Die genannten Komponenten sind dann wasserdicht gegenüber der Umgebung abgedichtet in dem Metallgehäuse aufgenommen. Mittels des Elektromotors kann ein Drehmoment zum Antrieb der Antriebswelle zur Verfügung gestellt werden. Gegebenenfalls kann das Drehmoment über ein Getriebe an die Antriebswelle in ein anderes Drehmoment/Drehzahlverhältnis übersetzt werden können.

Dadurch, dass der elektrische Antrieb einen Elektromotor, ein Getriebe und/oder eine Elektronikkomponente umfasst, können sämtliche zum Antrieb des Propellers über die Antriebswelle notwendigen Komponenten über das Metallgehäuse, welches im umströmten Zustand des Kunststoffgehäuses zumindest teilweise von Wasser umströmt wird, gekühlt werden. Die gesamte Motoreinheit wird so in einem Metallgehäuse untergebracht, welches im umströmten Zustand des Kunststoffgehäuses ebenfalls zumindest teilweise von Wasser umströmt und dadurch gekühlt wird.

Vorteilhafterweise ist das Metallgehäuse aus einem zylindrischen Metallrohr ausgebildet, welches an seinem vorderen Ende eine vordere Rohrabdichtung und/oder an seinem hinteren Ende eine hintere Rohrabdichtung umfasst. Dadurch kann das Metallgehäuse aus einem einfachen Rohr gefertigt sein, welches an seinen beiden Enden mit Deckeln abgedichtet wird. Insbesondere kann die Rohrabdichtung am hinteren Ende auch Teil des Metallgehäuses sein, also einteilig mit dem Metallgehäuse ausgebildet sein.

Vorteilhafterweise weist das Metallgehäuse an seinem vorderen Ende eine Kabelabdichtung zur Abdichtung eines Kabels und/oder an seinem hinteren Ende eine Wellenabdichtung auf. Dadurch kann gewährleistet werden, dass das Kabel und/oder die Antriebswelle aus dem Metallgehäuse geführt werden, ohne dass Wasser über diese Schnittstellen in das Metallgehäuse eintreten kann. Beispielsweise können die Kabel mittels einer geeigneten, dichten Verschraubung aus dem Metallrohr geführt werden. Die Verwendung einer Kabelabdichtung und/oder einer Wellenabdichtung ermöglicht, die gesamte Motoreinheit derart in dem Kunststoffgehäuse unterzubringen, dass ein zumindest teilweises Umströmen des Metallgehäuses möglich ist, ohne dass Wasser in das Metallgehäuse eindringt.

Vorteilhafterweise weist das Kunststoffgehäuse mehrere Strömungskanäle auf. Das Aufweisen mehrerer Strömungskanäle am oder im Kunststoffgehäuse hat den Vorteil, dass das darin angeordnete Metallgehäuse gleichmäßiger beziehungsweise gezielter umströmt und damit entsprechend besser gekühlt werden kann. Ferner hat dies den Vorteil, dass die Reibungsverluste, die durch das in das Kunststoffgehäuse eintretende Wasser hervorgerufen werden können, gleichmäßig über das Kunststoffgehäuse verteilt werden. Im Ergebnis kann dadurch vermieden werden, dass im Betrieb der Unterwasserantriebseinheit unerwünschte Roll- Gier- oder Nickmomente am Kunststoffgehäuse erzeugt werden.

Vorzugsweise können die Strömungskanäle des Kunststoffgehäuses Ausbuchtungen am Kunststoffgehäuse aufweisen, wodurch der effektive Zwischenraum zwischen Kunststoffgehäuse und Metallgehäuse vergrößert wird. Dadurch kann der Zufluss von Wasser an das Metallgehäuse vergrößert und der dabei entstehende Druckverlust reduziert werden. Gleichwohl können die Ausbuchtungen als längslaufende Strömungslenkelemente wirken, wodurch die Stabilität der Unterwasserantriebseinheit während der Fahrt optimiert wird.

Vorteilhafterweise sind die Strömungskanäle über Längsrippen voneinander getrennt, wobei die Längsrippen ferner das Metallgehäuse und das Kunststoffgehäuse aneinander fixieren. Dadurch kann gewährleistet werden, dass das Metallgehäuse einfach und sicher im Kunststoffgehäuse angeordnet ist. Zudem können so definierte Strömungskanäle ausgebildet werden, über die eine vorab definierte Umströmung des Metallgehäuses gewährleistet werden kann. Dadurch kann die Kühlung des Metallgehäuses während des Betriebs der Unterwassereinheit optimiert werden. Mit anderen Worten können dadurch im Betrieb hydrodynamisch induzierte Strömungsverluste reduziert werden, wodurch eine effiziente Kühlung des Metallgehäuses ermöglicht wird.

Vorteilhafterweise münden die Strömungskanäle jeweils in separate Eintrittsöffnungen und/oder Austrittsöffnungen im Kunststoffgehäuse. Dadurch können die Eintrittsöffnungen und/oder die Austrittsöffnungen gezielt an die Geometrie der entsprechenden Strömungskanäle angepasst werden. Die Eintrittsöffnungen können beispielsweise einen rechteckigen Querschnitt mit abgerundeten Ecken aufweisen. Wahlweise können die Austrittsöffnungen einen im Wesentlichen ovalen Querschnitt aufweisen. Auf diese Weise können im Betrieb hydrodynamisch induzierte Strömungsverluste reduziert werden, wodurch eine effiziente Kühlung des Metallgehäuses ermöglicht wird.

Gemäß einer alternativen Ausführungsform münden die Strömungskanäle in gemeinsame Eintrittsverteiler und/oder Austrittsverteiler mit einer gemeinsamen Eintrittsöffnung beziehungsweise Austrittsöffnung. Auf diese Weise können hydrodynamisch induzierte Strömungsverluste weiter reduziert werden wodurch eine effiziente Kühlung des Metallgehäuses ermöglicht wird.

Vorzugsweise ist das Metallgehäuse im Wesentlichen mittig im Kunststoffgehäuse angeordnet, wobei das Kunststoffgehäuse vorzugsweise einen Kabelführungskanal zwischen dem Metallgehäuse und dem Kunststoffgehäuse aufweist. Durch das im Wesentlichen mittig im Kunststoffgehäuse angeordnete Metallgehäuse kann erreicht werden, dass die Strömungskanäle gleichmäßig entlang des Umfangs des Kunststoffgehäuses angeordnet werden können. Darüber hinaus kann dadurch gewährleistet werden, dass das Metallgehäuse von allen Seiten durch das Kunststoffgehäuse gegenüber mechanischem Energieeintrag wie etwa bei einer Kollision oder Grundberührung geschützt wird.

Vorzugsweise weisen die Öffnungen und/oder der Strömungskanal starre oder variable Strömungsbegrenzungsmittel auf, mittels derer der Durchfluss durch den Strömungskanal einstellbar ist. Durch den Einsatz starrer oder variabler Strömungsbegrenzungsmittel in den Öffnungen und/oder dem Strömungskanal kann eine gezielte Zufuhr des das Metallgehäuse umströmenden Wassers eingestellt werden. Dadurch kann die Kühlung des Metallgehäuses nicht nur geschwindigkeitsabhängig, sondern über eine weitere Einstellgröße verändert werden. Im Ergebnis kann so die Kühlung des Metallgehäuses und der darin angeordneten Antriebskomponenten weiter verbessert werden.

Erfindungsgemäß weisen die Öffnungen und/oder der Strömungskanal Turbulatoren auf, wobei die Turbulatoren vorzugsweise mit dem Metallgehäuse verbunden sind. Dadurch, dass die Öffnungen und/oder der Strömungskanal Turbulatoren aufweist, kann der Wärmeübergang zwischen Metallgehäuse und dem das Metallgehäuse umströmenden Wassers deutlich verbessert werden. Mit anderen Worten werden durch die Turbulatoren turbulente Strömungsanteile vergrößert, wodurch der Wärmetransport begünstigt wird. Dies ist insbesondere dann gegeben, wenn die Turbulatoren mit dem Metallgehäuse verbunden sind. In diesem Fall wird sowohl der turbulente Strömungsanteil im Fluid vergrößert als auch die Oberfläche des Metallgehäuses, die für den Wärmetransport zur Verfügung steht. Mithin kann so eine besonders effiziente Kühlung des Metallgehäuses erfolgen. Gemäß einer vorteilhaften Weiterbildung sind die Turbulatoren so ausgebildet, dass trotz Turbulenzerzeugung der entstehende Druckverlust möglichst gering ist. Dadurch kann eine effiziente Kühlung erreicht werden, ohne dass dies einen merklichen Einfluss auf die Strömungsverluste hat.

Die Unterwasserantriebseinheit kann beispielsweise an dem Schaft eines elektrischen Außenbordmotors angebracht sein, wobei an der Oberseite des Schafts dann entweder unter anderem eine Steuereinheit mit integriertem Akkupack und Pinne, oder eine Steuereinheit mit Pinne aber ohne eigenes Akkupack angeordnet sein kann. Der Schaft des Außenbordmotors kann dabei ebenfalls durch ein einfach ausgestaltetes Metallrohr oder Kunststoffrohr ausgebildet sein, das von einem Kunststoffgehäuse umschlossen ist.

Die Unterwasserantriebseinheit kann auch in einem ausschließlich unter Wasser angeordneten Pod-Antrieb angeordnet sein.

In einer bevorzugten Weiterbildung ist das Schaftrohr direkt mit dem Metallgehäuse verbunden, bevorzugt mit dem Metallgehäuse verschweißt und/oder verschraubt und/oder vernietet und/oder das Schaftrohr ist einstückig mit dem Metallgehäuse ausgebildet.

Systemseitig wird die Aufgabe ferner mit einem System aus mindestens zwei Unterwasserantriebseinheiten gemäß der vorliegenden Offenbarung gelöst. Die mindestens zwei Unterwasserantriebseinheiten des Systems weisen dabei einen baugleichen elektrischen Antrieb und/oder ein baugleiches Metallgehäuse auf, wobei jeder elektrische Antrieb auf eine bestimmte, unterschiedliche Leistungsklasse voreingestellt ist, und wobei mindestens eine Abmessung des Kunststoffgehäuses in Abhängigkeit der voreingestellten Leistungsklasse gewählt ist.

Mit anderen Worten handelt es sich bei dem System um eine Produktpalette oder ein Produktportfolio. Die einzelnen, unterschiedlichen Leistungsklassen können etwa über eine Leistungselektronik auf ihre entsprechende Leistungsklasse eingestellt werden.

Durch die baugleichen elektrischen Antriebe und/oder Metallgehäuse können produktübergreifend gleiche Teile verbaut und dadurch Kosten eingespart werden. Dadurch, dass mindestens eine Abmessung des Kunststoffgehäuses in Abhängigkeit der voreingestellten Leistungsklasse gewählt ist, können einerseits physikalisch notwendige oder vorteilhafte Anpassungen am Kunststoffgehäuse vorgenommen werden. Andererseits kann dadurch auch ein optisches Unterscheidungsmerkmal erzielt werden, welches einen Rückschluss auf die voreingestellte Leistungsklasse beziehungsweise eine visuelle Unterscheidung der einzelnen voreingestellten Leistungsklassen ermöglicht. Dadurch kann eine verbesserte Vermarktung der Produkte erreicht werden.

Unter einer voreingestellten Leistungsklasse ist im Sinne der vorliegenden Offenbarung eine herstellerseitig fest vorgesehene Leistungsobergrenze gemeint, die der Endverbraucher nicht nach Belieben verändern kann, ohne tiefgreifende Manipulationen an der Unterwasserantriebseinheit vorzunehmen, wie etwa durch Chiptuning oder dergleichen.

Beispielsweise können zumindest zwei der fünf hier genannten Leistungsklassen voreingestellt werden, etwa 0,2 bis 0,7 PS, 1 bis 3 PS, 1,5 bis 3 PS, 5 bis 20 PS oder 40 bis 80 PS. Antriebe, die sich für zumindest zwei der genannten Leistungsklassen eignen, können etwa die gleiche Leistungselektronik, das gleiche Metallgehäuse und den gleichen elektrischen Antrieb aufweisen. Insbesondere kann eine der möglichen Leistungsklassen dann durch eine Einstellung der Leistungselektronik eingestellt werden, etwa durch Schalten eines Schalters oder eines Jumpers oder durch Programmieren beziehungsweise Einspielen einer Antriebssteuerung.

Mit anderen Worten können mit der identischen Hardware Antriebe unterschiedlicher Leistungsklassen bereitgestellt werden. Für die unterschiedlichen Leistungsklassen kann jedoch jeweils ein unterschiedlich ausgestaltetes Kunststoffgehäuse gewählt werden, so dass die Größe und Form des Gehäuses an die Schutzbedürftigkeit und die benötigten Strömungseigenschaften und insbesondere Wärmeabfuhrbedürfnisse der jeweils gewählten Leistungsklasse angepasst werden kann.

Beispielsweise ist bei einer Unterwasserantriebseinheit der 0,2 bis 0,7 PS -Klasse eine kleine Knautschzone und eine geringe Kühlleistung ausreichend, so dass das Kunststoffgehäuse klein ausgestaltet werden kann. Bei einer Unterwasserantriebseinheit der 40-80 PS-Klasse wird jedoch eine große Knautschzone und eine hohe Kühlleistung benötigt, so dass das Kunststoffgehäuse größer ausgestaltet werden kann und insbesondere auch robuster ausgestaltet werden kann. Insbesondere kann die Wandstärke des Kunststoffgehäuses vergrößert werden. Zudem können die Strömungseigenschaften des Kunststoffgehäuses der 40-80 PS-Klasse, an die größere erreichbare Geschwindigkeit und die größere mögliche Beschleunigung angepasst werden.

Vorteilhafterweise ist die erste Unterwasserantriebseinheit auf eine höhere Leistungsklasse als die zweite Unterwasserantriebseinheit voreingestellt, wobei das Kunststoffgehäuse der ersten Unterwasserantriebseinheit einen größeren Querschnitt und/oder eine größere Länge aufweist als das Kunststoffgehäuse der zweiten Unterwasserantriebseinheit.

Dadurch kann gewährleistet werden, dass die erste Unterwasserantriebseinheit mit der höheren Leistungsklasse einen lokal vergrößerten Abstand zwischen Kunststoffgehäuse und Metallgehäuse aufweist, wodurch der Wärmetransport zwischen Kunststoffgehäuse und Metallgehäuse optimiert werden kann. Letztlich kann dadurch die Betriebssicherheit der betreffenden Unterwasserantriebseinheit verbessert werden. Dadurch kann auch erreicht werden, dass die erste Unterwassereinheit mit der höheren Leistungsklasse ein im Vergleich mit der zweiten Unterwasserantriebseinheit größeres Erscheinungsbild aufweist, wodurch ein rein optisch erkennbarer Hinweis auf die höhere Leistungsklasse erzielt werden kann.

Die Aufgabe wird ferner mit einem Boot mit einer Unterwasserantriebseinheit gelöst.

### Kurze Beschreibung der Figuren

Bevorzugte weitere Ausführungsformen der Erfindung werden durch die nachfolgende Beschreibung der Figuren näher erläutert. Dabei zeigen:
- Figur 1: eine schematische Schnittansicht einer vereinfacht dargestellten Unterwasserantriebseinheit gemäß einer ersten Ausführungsform in einer entlang einer Längsrichtung der Unterwasserantriebseinheit verlaufenden Schnittebene;
- Figur 2: eine detaillierte Schnittansicht einer Unterwasserantriebseinheit gemäß einer weiteren Ausführungsform in einer entlang einer Längsrichtung der Unterwasserantriebseinheit verlaufenden Schnittebene;
- Figur 3: eine schematische Schnittansicht der Unterwasserantriebseinheit gemäß Figur 2 in einer senkrecht zur Längsachse der Unterwasserantriebseinheit orientierten Schnittebene;
- Figur 4: eine schematische Schnittansicht der Unterwasserantriebseinheit gemäß einer weiteren Ausführungsform in einer entlang einer Längsrichtung der Unterwasserantriebseinheit verlaufenden Schnittebene;
- Figur 5: die Unterwasserantriebseinheit aus Figur 4 in einer perspektivischen Darstellung; und
- Figur 6: eine schematische Ansicht einer Unterwasserantriebseinheit, bei welcher das Schaftrohr mit dem Metallgehäuse verbunden ist.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanzen zu vermeiden.

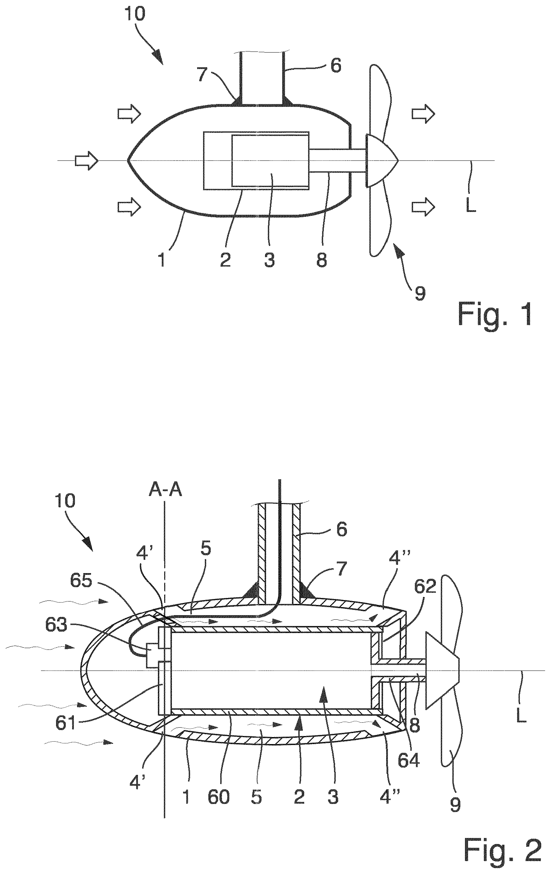

In Figur 1 ist eine schematische Schnittansicht einer vereinfacht dargestellten Unterwasserantriebseinheit 10 gemäß einer ersten Ausführungsform gezeigt. Die Unterwasserantriebseinheit 10 ist in einer entlang einer Längsrichtung L der Unterwasserantriebseinheit verlaufenden Schnittebene abgebildet. Die Unterwasserantriebseinheit 10 umfasst ein zur Umströmung mit Wasser ausgelegtes Kunststoffgehäuse 1 und ein im Kunststoffgehäuse 1 angeordnetes Metallgehäuse 2, in dem ein elektrischer Antrieb 3 aufgenommen ist.

Das Metallgehäuse 2 ist wasserdicht ausgeführt und nimmt den elektrischen Antrieb 3 auf. Das Metallgehäuse 2 ist wiederum vollständig innerhalb des Kunststoffgehäuses 1 angeordnet. Mithin kommt ein "Hülle-in-Hülle"-Prinzip zum Einsatz, nämlich ein "Metallgehäuse-in-Kunststoffgehäuse"-Prinzip. Die äußere Hülle, das Kunststoffgehäuse 1, erfüllt dabei die Funktion der Strömungsoptimierung, da im Betrieb der Unterwasserantriebseinheit 10 Wasser das Kunststoffgehäuse 1 umströmt. Die innere Hülle, das Metallgehäuse 2, erfüllt dabei die Funktion der Kühlung des Metallgehäuses 2 und damit letztlich der Kühlung des elektrischen Antriebs 3. Das Metallgehäuse 2 ist unbehandelt und wurde ohne wesentliche Oberflächenbehandlung hergestellt.

Das Kunststoffgehäuse 1 ist mit einem Schaftrohr 6 verbunden. Die Verbindung der Schaftrohrs 6 mit dem Kunststoffgehäuse 1 erfolgt über eine Schaftrohr-Anformung 7. Das Schaftrohr 6 muss in diesem Fall nicht abgedichtet sein. Die Unterwasserantriebseinheit 10 kann über das Schaftrohr 6 mit einem nicht dargestellten Boot verbunden werden. Der Vortrieb der Unterwasserantriebseinheit 10 wird dadurch erzeugt, dass ein elektrischer Antrieb 3 dem Metallgehäuse 2 eine Antriebswelle 8 antreibt, an die ein Propeller 9 montiert ist.

Figur 2 zeigt eine detaillierte Schnittansicht einer Unterwasserantriebseinheit 10 gemäß einer weiteren Ausführungsform in einer entlang einer Längsrichtung der Unterwasserantriebseinheit 10 verlaufenden Schnittebene. Das Kunststoffgehäuse 1 weist Öffnungen 4 auf, die über einen Strömungskanal 5 verbunden sind. Das Kunststoffgehäuse 1 ist dabei so ausgebildet, dass im umströmten Zustand des Kunststoffgehäuses 1 ein zumindest teilweises Umströmen des Metallgehäuses 2 erfolgt.

Die Öffnungen 4 umfassen eine im vorderen Bereich des Kunststoffgehäuses 1 ausgeführte Eintrittsöffnung 4' und eine im hinteren Bereich das Kunststoffgehäuse 1 ausgeführte Austrittsöffnung 4". Zwischen der Eintrittsöffnung 4' und der Austrittsöffnung 4" erstreckt sich im Wesentlichen entlang einer Längsachse L der Unterwasserantriebseinheit 10 der Strömungskanal 5.

Der Strömungskanal 5 der Unterwasserantriebseinheit 10 ist teilweise durch das Metallgehäuse 2 ausgebildet. Das bedeutet, dass im umströmten Zustand des Kunststoffgehäuses 1 Wasser über die Eintrittsöffnung 4' in den Strömungskanal 5 zum Metallgehäuse 2 gelangt und dieses benetzt. Über das Wirkflächenpaar Wasser-Metallgehäuse wird der Wärmetransport zwischen Metallgehäuse 2 und umströmendes Wasser begünstigt. Das Metallgehäuse 2 ist wasserdicht.

Das Kunststoffgehäuse 1 ist mit einem Schaftrohr 6 verbunden. Die Verbindung der Schaftrohrs 6 mit dem Kunststoffgehäuse 1 erfolgt über eine Schaftrohr-Anformung 7. Das Schaftrohr 6 muss in diesem Fall nicht abgedichtet sein. Die Unterwasserantriebseinheit 10 kann über das Schaftrohr 6 mit einem nicht dargestellten Boot verbunden werden. Der Vortrieb der Unterwasserantriebseinheit 10 wird dadurch erzeugt, dass ein elektrischer Antrieb 3 dem Metallgehäuse 2 eine Antriebswelle 8 antreibt, an die ein Propeller 9 montiert ist.

Die in Figur 2 dargestellte Unterwasserantriebseinheit 10 weist zwei Strömungskanäle 5 auf. Entsprechend weist die Unterwasserantriebseinheit 10 zwei Eintrittsöffnungen 4' sowie zwei Austrittsöffnungen 4" auf. Die Eintrittsöffnungen 4 sowie die Austrittsöffnungen 4" jeweils als separate Öffnungen 4 im Kunststoffgehäuse 1 ausgeführt.

Gemäß der Abbildung in Figur 2 weist das Metallgehäuse 2 ferner ein Metallrohr 60 auf, das an einem vorderen Ende eine vordere Rohrabdichtung 61 und an seinem hinteren Ende eine hintere Rohrabdichtung 62 umfasst. Das Metallrohr 60 ist ein einfaches, unbehandeltes Metallrohr. Die vordere Rohrabdichtung 61 sowie die hintere Rohrabdichtung 62 können jeweils als Deckel verstanden werden. Über diese Deckel wird das Metallrohr 2 gegen Wassereintritt abgedichtet. Die Deckel können über Schraubverbindungen, insbesondere über Flansche, mit dem Metallrohr 60 gegebenenfalls zusätzlich mittels geeigneter Dichtungen verbunden werden. Darüber hinaus weist das Metallgehäuse 2 an seinem vorderen Ende eine Kabelabdichtung 63 und an seinem hinteren Ende eine Wellenabdichtung 64 auf. In dem konkreten Ausführungsbeispiel ist die Kabelabdichtung 63 an der vorderen Rohrabdichtung 63 angeordnet und die Wellenabdichtung 64 an der hinteren Rohrabdichtung 62 angeordnet.

Über die Kabelabdichtung 63, die in der vorderen Rohrabdichtung 61 Metallgehäuses 3 angeordnet ist, wird ein Kabel 65 gegen Wassereintritt abgedichtet aus der Metallgehäuse 2 in den Kabelführungskanal 50 geleitet. Anschließend wird das Kabel 65 aus dem Kabelführungskanal 50 an der Schaftrohr-Anformung 7 in das Schaftrohr 6 geleitet.

Der elektrische Antrieb 3 kann dabei i) einen Motor, ii) einen Motor mit einem Getriebe, iii) einen Motor mit Elektronik und iv) einen Motor mit Getriebe und Elektronik umfassen.

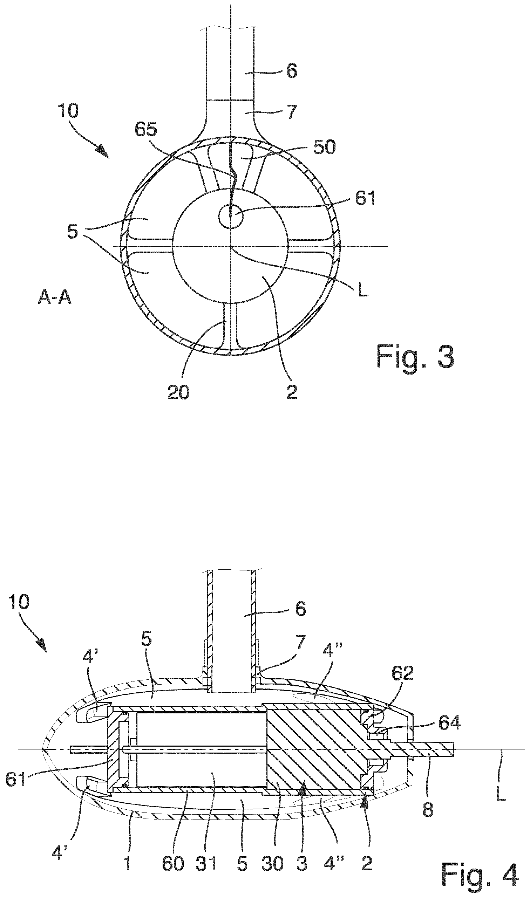

Figur 3 zeigt eine schematische Schnittansicht der Unterwasserantriebseinheit 10 gemäß der in Figur 2 gezeigten Ausführungsform in einer Schnittebene A-A, die senkrecht zur Längsachse L orientiert ist und durch die vordere Rohrabdichtung 61 verläuft.

Mithin ist in Figur 3 die Unterwasserantriebseinheit 10 gezeigt, die ein zur Umströmung mit Wasser ausgelegtes Kunststoffgehäuse 1 und ein im Kunststoffgehäuse 1 angeordnetes Metallgehäuse 2 mit einem nicht dargestellten elektrischen Antrieb umfasst. Das Kunststoffgehäuse 1 weist dabei mehrere Strömungskanäle 5 auf, die über Längsrippen 20 voneinander getrennt sind. Die Längsrippen fixieren darüber hinaus das Metallgehäuse 2 und das Kunststoffgehäuse 1 aneinander. Dabei ist das Metallgehäuse 2 im Wesentlichen mittig im Kunststoffgehäuse 1 angeordnet. Ferner weist das Kunststoffgehäuse 1 einen Kabelführungskanal 50 zwischen dem Metallgehäuse 2 und dem Kunststoffgehäuse 1 auf.

Über die Kabelabdichtung 63, die in der vorderen Rohrabdichtung 61 des Metallgehäuses 3 angeordnet ist, wird das Kabel 65 gegen Wassereintritt abgedichtet aus der Metallgehäuse 2 in den Kabelführungskanal 50 geleitet. Anschließend wird das Kabel 65 aus dem Kabelführungskanal 50 an der Schaftrohr-Anformung 7 in das Schaftrohr 6 geleitet.

Figur 4 zeigt eine schematische Schnittansicht der Unterwasserantriebseinheit 10 gemäß einer weiteren Ausführungsform in einer entlang der Längsrichtung 11 verlaufenden Schnittebene. Dementsprechend zeigt die Abbildung aus Figur 4 einer Unterwasserantriebseinheit 10, die ein zur Umströmung mit Wasser ausgelegtes Kunststoffgehäuse 1 und ein im Kunststoffgehäuse 1 angeordnetes wasserdichtes Metallgehäuse 2 mit einem elektrischen Antrieb 3 umfasst. Das Kunststoffgehäuse 1 weist mehrere Strömungskanäle 5 auf, die jeweils zwischen separaten Eintrittsöffnungen 4 und separaten Austrittsöffnungen 5 verlaufen. Das Kunststoffgehäuse 1 dabei so ausgebildet, dass im umströmten Zustand des Kunststoffgehäuses 1 ein zumindest teilweises Umströmen des Metallgehäuses 2 erfolgt. Im konkreten Beispiel erfolgt das Umströmen des Metallgehäuses 2 durch die Durchströmung der einzelnen Strömungskanäle 5. Die jeweiligen Strömungskanäle 5 sind dabei teilweise durch das Metallgehäuse 2 ausgebildet. Im umströmten Zustand des Kunststoffgehäuses 1 benetzt das umströmende Wasser die Außenseite des Metallgehäuses 2.

Das Kunststoffgehäuse 1 ist mit einem Schaftrohr 6 verbunden, wobei die Verbindung über eine Schaftrohr-Anformung 7 erfolgt. Der elektrische Antrieb 3 der Unterwasserantriebseinheit umfasst einen Elektromotor 31, ein Getriebe 30sowie eine Elektronikkomponente und treibt über eine Antriebswelle 8 einen Propeller an (nicht dargestellt).

Das Metallgehäuse 2 der Unterwasserantriebseinheit 10 weist an seinem vorderen Ende eine Kabelabdichtung 63 (nicht gezeigt) zur Abdichtung eines Kabels 65 und an seinem hinteren Ende eine Wellenabdichtung 64 auf. Die Kabelabdichtung 63 ist dabei an einer vorderen Rohrabdichtung 61 angeordnet, die an einem vorderen Ende des Metallrohr 60 angeordnet ist. Die Wellenabdichtung 64 ist an einer hinteren Rohrabdichtung 62 angeordnet, die an einem hinteren Ende des Metallrohr 60 angeordnet ist.

Die Eintrittsöffnungen 4' weisen einen im Wesentlichen rechteckigen Querschnitt mit abgerundeten Kanten auf. Die Austrittsöffnungen 4" weisen einen im Wesentlichen ovalen Querschnitt auf. Auf diese Weise können hydrodynamisch induzierte Strömungsverluste reduziert werden, wodurch eine effiziente Kühlung des Metallgehäuses 2 ermöglicht wird.

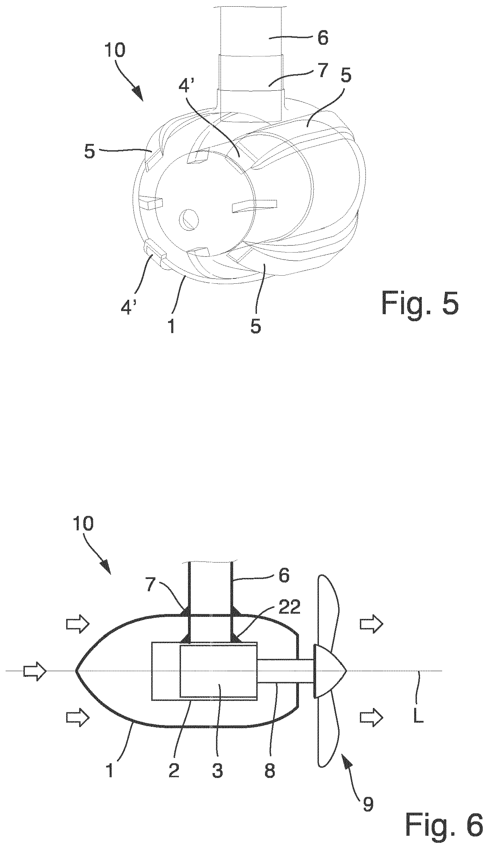

Figur 5 zeigt die Unterwasserantriebseinheit 10 aus Figur 4 in einer perspektivischen Darstellung. Aus dieser Darstellung wird ersichtlich, dass die einzelnen Strömungskanäle 5 der Unterwasserantriebseinheit 10 Ausbuchtungen aufweisen. Mit anderen Worten weist das Kunststoffgehäuse 1 Ausbuchtungen auf. Die jeweiligen Eintrittsöffnungen 4' und Austrittsöffnungen 4" sind dabei an Beginn und Ende einer jeden Ausbuchtung ausgeführt.

Figur 6 zeigt eine Unterwasserantriebseinheit 10, ähnlich der Variante aus Figur 1, wobei hier als Unterschied das Schaftrohr 6 direkt mit dem Metallgehäuse 2 verbunden ist. Die Verbindung ist im gezeigten Ausführungsbeispiel durch eine Verschweißung 22 des Schaftrohrs 6 mit dem Metallgehäuse 2 bereitgestellt.

Die direkte Verbindung zwischen dem Schaftrohr 6 und dem Metallgehäuse 2 kann aber auch durch Verschrauben oder Vernieten erreicht werden. In einer weiteren Ausführungsform kann das Schaftrohr 6 einstückig mit dem Metallgehäuse 2 ausgeführt sein.

In den genannten Varianten kann das Kunststoffgehäuse 1 entweder ebenfalls mit dem Schaftrohr 6 verbunden sein - wie in Figur 6 gezeigt. Hier ist auch eine Schaftrohr-Anformung 7 vorgesehen, die zur Verbindung des Kunststoffgehäuses 1 mit dem Schaftrohr 6 dient.

Das Kunststoffgehäuse 1 kann aber bei einer direkten Verbindung zwischen Schaftrohr 6 und Metallgehäuse 2 auch ohne Kontakt mit dem Schaftrohr 6 angeordnet sein. Das Schaftrohr 6 kann beispielsweise lediglich durch eine Öffnung im Kunststoffgehäuse 1 geführt sein.

Soweit anwendbar, können alle einzelnen Merkmale, die in den Ausführungsbeispielen dargestellt sind, miteinander kombiniert und/oder ausgetauscht werden, ohne den Bereich der Erfindung zu verlassen.

### Bezugszeichenliste

- 1: Kunststoffgehäuse
- 2: Metallgehäuse
- 3: Elektrischer Antrieb
- 4: Öffnungen
- 4': Eintrittsöffnungen
- 4": Austrittsöffnungen
- 5: Strömungskanal
- 6: Schaftrohr
- 7: Schaftrohr-Anformung
- 8: Antriebswelle
- 9: Propeller
- 10: Unterwasserantriebseinheit
- 20: Längsrippen
- 22: Verschweißung
- 30: Getriebe
- 31: Elektromotor
- 50: Kabelführungskanal
- 60: Metallrohr
- 61: Vordere Rohrabdichtung
- 62: Hintere Rohrabdichtung
- 63: Kabelabdichtung
- 64: Wellenabdichtung
- 65: Kabel

## Patentansprüche

1. Unterwasserantriebseinheit (10), bevorzugt für einen Außenbordmotor oder einen Pod-Antrieb, umfassend ein zur Umströmung mit Wasser ausgelegtes Kunststoffgehäuse (1) und ein Metallgehäuse (2), in dem ein elektrischer Antrieb (3) aufgenommen ist,
wobei der elektrische Antrieb (3) wasserdicht gegenüber der Umgebung abgedichtet in dem Metallgehäuse (2) aufgenommen ist und das Metallgehäuse (2) innerhalb des Kunststoffgehäuses (1) angeordnet ist,
wobei das Kunststoffgehäuse (1) Öffnungen (4) aufweist, die über einen Strömungskanal (5) verbunden sind, wobei das Kunststoffgehäuse (1) so ausgebildet ist, dass im umströmten Zustand des Kunststoffgehäuses (1) ein zumindest teilweises Umströmen des Metallgehäuses (2) erfolgt, wobei die Öffnungen (4) und/oder der Strömungskanal (5) Turbulatoren aufweist.

2. Unterwasserantriebseinheit (10) gemäß Anspruch 1, **dadurch gekennzeichnet, dass** das Kunststoffgehäuse (1) im vorderen Bereich eine Eintrittsöffnung (4') und im hinteren Bereich eine Austrittsöffnung (4") umfasst und sich der Strömungskanal (5) entlang der Längsachse (L) der Unterwasserantriebseinheit (10) erstreckt.

3. Unterwasserantriebseinheit (10) gemäß Anspruch 1 oder 2, **dadurch gekennzeichnet, dass** der Strömungskanal (5) zumindest teilweise durch das Metallgehäuse (2) begrenzt wird.

4. Unterwasserantriebseinheit (10) gemäß einem der vorstehenden Ansprüche, **dadurch gekennzeichnet, dass** das Kunststoffgehäuse (1) mit einem Schaftrohr (6) verbunden ist, wobei die Verbindung bevorzugt über eine Schaftrohr-Anformung (7) erfolgt.

5. Unterwasserantriebseinheit (10) gemäß einem der vorstehenden Ansprüche, **dadurch gekennzeichnet, dass** der elektrische Antrieb (3) einen Elektromotor (31), ein optionales Getriebe (30) und/oder eine Elektronikkomponente umfasst und über eine Antriebswelle (8) einen Propeller (9) antreibt.

6. Unterwasserantriebseinheit (10) gemäß einem der vorstehenden Ansprüche, **dadurch gekennzeichnet, dass** das Metallgehäuse (2) ein Metallrohr (60) aufweist, das an einem vorderen Ende eine vordere Rohrabdichtung (61) und/oder an seinem hinteren Ende eine hintere Rohrabdichtung (62) umfasst, wobei insbesondere das Metallgehäuse (2) an seinem vorderen Ende eine Kabelabdichtung (63) zur Abdichtung eines Kabels (65) und/oder an seinem hinteren Ende eine Wellenabdichtung (64) aufweist.

7. Unterwasserantriebseinheit (10) gemäß einem der vorstehenden Ansprüche, **dadurch gekennzeichnet, dass** das Kunststoffgehäuse (2) mehrere Strömungskanäle (5) aufweist.

8. Unterwasserantriebseinheit (10) gemäß Anspruch 7, **dadurch gekennzeichnet, dass** die Strömungskanäle (5) über Längsrippen (20) voneinander getrennt sind, wobei die Längsrippen (20) ferner das Metallgehäuse (2) und das Kunststoffgehäuse (1) aneinander fixieren.

9. Unterwasserantriebseinheit (10) gemäß Anspruch 7 oder 8, **dadurch gekennzeichnet, dass** die Strömungskanäle (5) jeweils in separate Eintrittsöffnungen (4') und/oder Austrittsöffnungen (4") im Kunststoffgehäuse (1) münden.

10. Unterwasserantriebseinheit (10) gemäß Anspruch 7 oder 8, **dadurch gekennzeichnet, dass** die Strömungskanäle (5) in gemeinsame Eintrittsverteiler und/oder Austrittsverteiler mit einer gemeinsamen Eintrittsöffnung beziehungsweise Austrittsöffnung münden.

11. Unterwasserantriebseinheit (10) gemäß einem der vorstehenden Ansprüche, **dadurch gekennzeichnet, dass** das Metallgehäuse (2) im Wesentlichen mittig im Kunststoffgehäuse (1) angeordnet ist, wobei das Kunststoffgehäuse (1) vorzugsweise einen Kabelführungskanal (50) zwischen dem Metallgehäuse (2) und dem Kunststoffgehäuse (1) aufweist.

12. Unterwasserantriebseinheit (10) gemäß einem der vorstehenden Ansprüche, **dadurch gekennzeichnet, dass** die Öffnungen (4) und/oder der Strömungskanal (5) starre oder variable Strömungsbegrenzungsmittel aufweisen, mittels der der Durchfluss durch den Strömungskanal (5) einstellbar ist.

13. Unterwasserantriebseinheit (10) gemäß einem der vorstehenden Ansprüche, **dadurch gekennzeichnet, dass** die Turbulatoren vorzugsweise mit dem Metallgehäuse (2) verbunden sind.

14. Unterwasserantriebseinheit (10) gemäß einem der vorstehenden Ansprüche, **dadurch gekennzeichnet, dass** das Schaftrohr (6) direkt mit dem Metallgehäuse (2) verbunden ist, bevorzugt mit dem Metallgehäuse verschweißt und/oder verschraubt und/oder vernietet ist und/oder das Schaftrohr (6) einstückig mit dem Metallgehäuse (2) ausgebildet ist.

15. Boot mit einer Unterwasserantriebseinheit (10) gemäß einem der vorstehenden Ansprüche 1 bis 14.

## Claims

1. Underwater propulsion unit (10), preferably for an outboard motor or a pod drive, comprising a plastic housing (1) configured for water to flow around and a metal housing (2) in which an electric drive (3) is accommodated,
wherein the electric drive (3) is accommodated in the metal housing (2) so as to be sealed off from surroundings in a watertight manner and the metal housing (2) is arranged inside the plastic housing (1),
wherein the plastic housing (1) has openings (4) which are connected via a flow channel (5), wherein the plastic housing (1) is configured such that, when water flows around the plastic housing (1), the water flows at least partially around the metal housing (2), wherein the openings (4) and/or the flow channel (5) have turbulators.

2. Underwater propulsion unit (10) according to claim 1, **characterized in that** the plastic housing (1) comprises an inlet opening (4') in a front region and an outlet opening (4") in a rear region, and the flow channel (5) extends along the longitudinal axis (L) of the underwater propulsion unit (10).

3. Underwater propulsion unit (10) according to claim 1 or 2, **characterized in that** the flow channel (5) is delimited at least partially by the metal housing (2).

4. Underwater propulsion unit (10) according to one of the preceding claims, **characterized in that** the plastic housing (1) is connected to a shaft tube (6), wherein the connection is preferably made via a shaft tube moulded-on portion (7).

5. Underwater propulsion unit (10) according to one of the preceding claims, **characterized in that** the electric drive (3) comprises an electric motor (31), an optional transmission (30) and/or an electronic component and drives a propeller (9) via a drive shaft (8).

6. Underwater propulsion unit (10) according to one of the preceding claims, **characterized in that** the metal housing (2) has a metal tube (60) which comprises a front tube seal (61) at a front end and/or a rear tube seal (62) at its rear end, wherein in particular the metal housing (2) has a cable seal (63) at its front end for sealing a cable (65) and/or a shaft seal (64) at its rear end.

7. Underwater propulsion unit (10) according to one of the preceding claims, **characterized in that** the plastic housing (1) has a plurality of flow channels (5).

8. Underwater propulsion unit (10) according to claim 7, **characterized in that** the flow channels (5) are separated from one another via longitudinal ribs (20), wherein the longitudinal ribs (20) further fix the metal housing (2) and the plastic housing (1) to one another.

9. Underwater propulsion unit (10) according to claim 7 or 8, **characterized in that** the flow channels (5) each open into separate inlet openings (4') and/or outlet openings (4") in the plastic housing (1).

10. Underwater propulsion unit (10) according to claim 7 or 8, **characterized in that** the flow channels (5) open into common inlet distributors and/or outlet distributors with a common inlet opening or outlet opening.

11. Underwater propulsion unit (10) according to one of the preceding claims, **characterized in that** the metal housing (2) is arranged substantially centrally in the plastic housing (1), wherein the plastic housing (1) preferably has a cable guide channel (50) between the metal housing (2) and the plastic housing (1).

12. Underwater propulsion unit (10) according to one of the preceding claims, **characterized in that** the openings (4) and/or the flow channel (5) have rigid or variable flow-limiting means, by means of which the flow through the flow channel (5) can be adjusted.

13. Underwater propulsion unit (10) according to one of the preceding claims, **characterized in that** the turbulators are preferably connected to the metal housing (2).

14. Underwater propulsion unit (10) according to one of the preceding claims, **characterized in that** the shaft tube (6) is connected directly to the metal housing (2), preferably is welded and/or screwed and/or riveted to the metal housing, and/or the shaft tube (6) is configured in one piece with the metal housing (2).

15. Boat having an underwater propulsion unit (10) according to one of the preceding claims 1 to 14.

## Revendications

1. Unité d'entraînement sous-marine (10), de préférence pour un moteur hors-bord ou un entraînement en nacelle, comprenant un boîtier en matière plastique (1) conçu pour être baigné par de l'eau et un boîtier métallique (2), dans lequel est logé un entraînement électrique (3),
l'entraînement électrique (3) étant logé de manière étanche à l'eau par rapport à l'environnement dans le boîtier métallique (2) et le boîtier métallique (2) étant disposé à l'intérieur du boîtier en matière plastique (1),
le boîtier en matière plastique (1) présentant des ouvertures (4) qui sont reliées par le biais d'un canal d'écoulement (5), le boîtier en matière plastique (1) étant réalisé de telle sorte qu'à l'état baigné du boîtier en matière plastique (1), il se produit un écoulement au moins partiel autour du boîtier métallique (2), les ouvertures (4) et/ou le canal d'écoulement (5) présentant des turbulateurs.

2. Unité d'entraînement sous-marine (10) selon la revendication 1, **caractérisée en ce que** le boîtier en matière plastique (1) comprend dans la région avant une ouverture d'entrée (4') et dans la région arrière une ouverture de sortie (4") et le canal d'écoulement (5) s'étend le long de l'axe longitudinal (L) de l'unité d'entraînement sous-marine (10).

3. Unité d'entraînement sous-marine (10) selon la revendication 1 ou 2, **caractérisée en ce que** le canal d'écoulement (5) est limité au moins en partie par le boîtier métallique (2).

4. Unité d'entraînement sous-marine (10) selon l'une quelconque des revendications précédentes, **caractérisée en ce que** le boîtier en matière plastique (1) est relié à un tube d'arbre (6), la liaison s'effectuant de préférence par le biais d'un surmoulage de tube d'arbre (7).

5. Unité d'entraînement sous-marine (10) selon l'une quelconque des revendications précédentes, **caractérisée en ce que** l'entraînement électrique (3) comprend un moteur électrique (31), une transmission optionnelle (30) et/ou un composant électronique et entraîne une hélice (9) par le biais d'un arbre d'entraînement (8).

6. Unité d'entraînement sous-marine (10) selon l'une quelconque des revendications précédentes, **caractérisée en ce que** le boîtier métallique (2) présente un tube métallique (60) qui comprend au niveau d'une extrémité avant un joint d'étanchéité de tube avant (61) et/ou au niveau de son extrémité arrière un joint d'étanchéité de tube arrière (62), le boîtier métallique (2) présentant en particulier au niveau de son extrémité avant un joint d'étanchéité de câble (63) pour l'étanchéité d'un câble (65) et/ou au niveau de son extrémité arrière un joint d'étanchéité d'arbre (64).

7. Unité d'entraînement sous-marine (10) selon l'une quelconque des revendications précédentes, **caractérisée en ce que** le boîtier en matière plastique (1) présente plusieurs canaux d'écoulement (5).

8. Unité d'entraînement sous-marine (10) selon la revendication 7, **caractérisée en ce que** les canaux d'écoulement (5) sont séparés les uns des autres par le biais de nervures longitudinales (20), les nervures longitudinales (20) fixant en outre le boîtier métallique (2) et le boîtier en matière plastique (1) l'un à l'autre.

9. Unité d'entraînement sous-marine (10) selon la revendication 7 ou 8, **caractérisée en ce que** les canaux d'écoulement (5) débouchent à chaque fois dans des ouvertures d'entrée (4') et/ou des ouvertures de sortie (4") séparées dans le boîtier en matière plastique (1).

10. Unité d'entraînement sous-marine (10) selon la revendication 7 ou 8, **caractérisée en ce que** les canaux d'écoulement (5) débouchent dans des répartiteurs d'entrée et/ou des répartiteurs de sortie communs avec une ouverture d'entrée ou une ouverture de sortie commune.

11. Unité d'entraînement sous-marine (10) selon l'une quelconque des revendications précédentes, **caractérisée en ce que** le boîtier métallique (2) est disposé sensiblement au centre dans le boîtier en matière plastique (1), le boîtier en matière plastique (1) présentant de préférence un canal de guidage de câble (50) entre le boîtier métallique (2) et le boîtier en matière plastique (1).

12. Unité d'entraînement sous-marine (10) selon l'une quelconque des revendications précédentes, **caractérisée en ce que** les ouvertures (4) et/ou le canal d'écoulement (5) présentent des moyens de limitation d'écoulement rigides ou variables, au moyen desquels le débit à travers le canal d'écoulement (5) peut être ajusté.

13. Unité d'entraînement sous-marine (10) selon l'une quelconque des revendications précédentes, **caractérisée en ce que** les turbulateurs sont de préférence reliés au boîtier métallique (2).

14. Unité d'entraînement sous-marine (10) selon l'une quelconque des revendications précédentes, **caractérisée en ce que** le tube d'arbre (6) est relié directement au boîtier métallique (2), de préférence est soudé et/ou vissé et/ou riveté au boîtier métallique et/ou le tube d'arbre (6) est réalisé d'une seule pièce avec le boîtier métallique (2).

15. Bateau comprenant une unité d'entraînement sous-marine (10) selon l'une quelconque des revendications précédentes 1 à 14.
